# EUROPEAN PATENT APPLICATION

(11) **EP 4 531 364 A1**
(43) Date of publication of application: **02.04.2025**
(21) Application number: 23823088.2
(22) Date of filing: 12.06.2023
(51) Int. Cl.: H04L 43/50

(54) **IN-SITU FLOW INFORMATION TELEMETRY METHOD, APPARATUS, SYSTEM, DEVICE AND STORAGE MEDIUM**

(30) Priority: 15.06.2022 CN 202210676353; 05.08.2022 CN 202210938620
(71) Applicant: Huawei Technologies Co., Ltd., Shenzhen, Guangdong 518129 (CN)
(72) Inventor: WU, Haifeng, Shenzhen, Guangdong 518129 (CN)
(74) Representative: Maiwald GmbH
(86) International application number: PCT/CN2023/099728
(87) International publication number: WO 2023/241520

(57) **Abstract**

This application discloses an in-situ flow detection method, an apparatus, a device, a system, and a storage medium, and relates to the field of communication technologies. A first network device is used as an example. The method includes: receiving a first service packet, and generating, based on first service characteristic information included in the first service packet, a first flow identifier corresponding to a service flow to which the first service packet belongs, where the first service characteristic information identifies a service packet belonging to the service flow; and adding the first flow identifier to the first service packet, to obtain a second service packet, where the first flow identifier indicates a second network device receiving the second service packet to perform in-situ flow detection based on the first flow identifier. The device sends the second service packet. According to the method, a flow identifier on a pure data plane is generated, so that in-situ flow detection can be promptly performed on a service packet used to generate the flow identifier. In this way, the detected service packet is more comprehensive, and rapid and lossless in-situ flow detection is implemented.

## Description

This application claims priorities to Chinese Patent Application No. 202210676353.8, filed on June 15, 2022 and entitled "METHOD, DEVICE, AND SYSTEM FOR DYNAMICALLY ALLOCATING AND RECOLLECTING FLOW ID ON DATA PLANE", and to Chinese Patent Application No. 202210938620.4, filed on August 5, 2022 and entitled "IN-SITU FLOW DETECTION METHOD, APPARATUS, DEVICE, SYSTEM, AND STORAGE MEDIUM", both of which are incorporated herein by reference in their entireties.

### TECHNICAL FIELD

This application relates to the field of communication technologies, and in particular, to an in-situ flow detection method, an apparatus, a device, a system, and a storage medium.

### BACKGROUND

In the field of communication technologies, in-situ flow detection needs to be performed on a service flow communicated in a network, to perceive an actual transmission status of the service flow. Usually, a control device generates different flow identifiers based on service characteristic information of different service flows, and then delivers a correspondence between service characteristic information and a flow identifier to a network device. In this way, when communicating a service packet on a data plane, the network device can determine, based on service characteristic information included in the service packet, that the service packet is a packet on which in-situ flow detection needs to be performed, and perform in-situ flow detection on the service packet based on a flow identifier corresponding to the service characteristic information.

However, in the foregoing manner of obtaining the flow identifier by using the control device, when service characteristic information of service packets belonging to a same service flow changes, because the control device cannot quickly perceive the change, a service packet whose service characteristic information changes is not detected. Consequently, an in-situ flow detection effect is lossy and inaccurate.

### SUMMARY

This application provides an in-situ flow detection method, an apparatus, a device, a system, and a storage medium, to generate, by using a network device on a data plane, a corresponding flow identifier for a service flow on which in-situ flow detection is performed.

According to a first aspect, an in-situ flow detection method is provided. An example in which a first network device performs the method is used. The method includes: After receiving a first service packet, the first network device generates, based on first service characteristic information included in the first service packet, a first flow identifier corresponding to a service flow to which the first service packet belongs. The first service characteristic information identifies a service packet belonging to the service flow. After generating the first flow identifier, the first network device adds the first flow identifier to the first service packet, to obtain a second service packet, and sends the second service packet. The first flow identifier indicates a second network device receiving the second service packet to perform in-situ flow detection based on the first flow identifier.

According to the method, a flow identifier is generated on a data plane, and the flow identifier is added to a service packet that needs to be detected, to implement in-situ flow detection. In this way, the detected service packet is more comprehensive, and rapid and lossless in-situ flow detection is implemented. Compared with a manner of obtaining a flow identifier by using a control plane, this not only improves generation efficiency of the flow identifier, but also reduces information exchange between the data plane and the control plane, so that damage to the in-situ flow detection caused by a phenomenon such as a packet loss during information exchange is avoided. This further ensures lossless in-situ flow detection, and improves a detection capability of the in-situ flow detection.

In a possible implementation, the first service packet is an initial packet of the service flow or an initial packet obtained after service characteristic information of the service flow changes. When the first service packet is the initial packet obtained after the service characteristic information of the service flow changes, rapid and lossless in-situ flow detection on a service flow whose service characteristic information is dynamically changed can be implemented. In other words, the communicated service flow can be dynamically and accurately monitored. In a case in which the first service packet is the initial packet of the service flow, because there is no need to obtain the flow identifier by using the control plane, the in-situ flow detection on the service flow can be automatically implemented on the data plane. This improves in-situ flow detection efficiency.

In a possible implementation, the first network device may generate the first flow identifier based on an identifier of the first network device, an identifier of a first chip, and a first service identifier. The first chip is a chip that is on the first network device and that receives the first service packet, and the first service identifier is allocated by the first chip to the first service characteristic information.

In this case, the identifier of the first network device is unique in an in-situ flow detection domain, the identifier of the first chip is unique in the first network device, and the first service identifier is unique in the first chip. Therefore, the generated first flow identifier is unique in the in-situ flow detection domain. This ensures that in an application scenario in which the first network device includes a plurality of chips, no conflict occurs on the first flow identifier on each network device in the in-situ flow detection domain. In this way, in-situ flow detection accuracy is improved.

In another possible implementation, the first network device may generate the first flow identifier based on an identifier of the first network device, an identifier of a first chip, an identifier of a first storage medium, and a first service identifier. The first storage medium on the first chip is a storage medium that is on the first network device and that receives the first service packet, and the first service identifier is allocated by the first storage medium to the first service characteristic information.

In this case, the identifier of the first network device is unique in an in-situ flow detection domain, the identifier of the first chip is unique in the first network device, the first storage medium is unique in the first chip, and the first service identifier is unique in the first storage medium. Therefore, the generated first flow identifier is unique in the in-situ flow detection domain. This ensures that in an application scenario in which the first network device includes a plurality of chips and each chip includes a plurality of storage media, no conflict occurs on the first flow identifier on each network device in the in-situ flow detection domain. In this way, in-situ flow detection accuracy is improved.

In still another possible implementation, the first network device may generate the first flow identifier based on an identifier of a first in-situ flow detection instance and a first service identifier. The first service identifier is allocated by the first network device to the first service characteristic information. The identifier of the first in-situ flow detection instance is delivered by a control device. In other words, before generating, based on the first service characteristic information included in the first service packet, the first flow identifier corresponding to the service flow to which the first service packet belongs, the first network device receives the identifier of the first in-situ flow detection instance that is sent by the control device. The first in-situ flow detection instance is used to perform in-situ flow detection on the service flow.

In this case, the control device is a device configuring a plurality of in-situ flow detection instances in an in-situ flow detection domain, and the identifier of the first in-situ flow detection instance is uniformly allocated and delivered by the control device. This can ensure that the identifier of the first in-situ flow detection instance is unique in the in-situ flow detection domain, and the first service identifier is unique in the first network device. Therefore, the generated first flow identifier is unique in the in-situ flow detection domain. This ensures that no conflict occurs on the first flow identifier on each network device in the in-situ flow detection domain. In this way, in-situ flow detection accuracy is improved.

In a possible implementation, after the first network device receives the first service packet, when the first service characteristic information belongs to a service characteristic range, the first network device generates, based on the first service characteristic information included in the first service packet, the first flow identifier corresponding to the service flow to which the first service packet belongs. The service characteristic range is delivered by the control device. In other words, before generating, based on the first service characteristic information included in the first service packet, the first flow identifier corresponding to the service flow to which the first service packet belongs, the first network device receives the service characteristic range of the first in-situ flow detection instance that is sent by the control device. The first in-situ flow detection instance is used to perform in-situ flow detection on the service flow.

Whether the first service characteristic information belongs to the service characteristic range is determined, so that in-situ flow detection on a specified service flow can be implemented. In this way, a target of the in-situ flow detection is more accurate. In addition, the service characteristic range includes a plurality of pieces of service characteristic information. Therefore, accurate in-situ flow detection on a service flow whose service characteristic information belongs to the service characteristic range and is dynamically changed can be implemented.

In a possible implementation, after generating, based on the first service characteristic information included in the first service packet, the first flow identifier corresponding to the service flow to which the first service packet belongs, a correspondence between the first service characteristic information and the first flow identifier may be further stored into a mapping flow table. The mapping flow table includes a plurality of pieces of service characteristic information and a flow identifier corresponding to each piece of service characteristic information. The mapping flow table is constructed, so that when a non-initial packet including the first service characteristic information is received, the first flow identifier corresponding to the first service characteristic information may be directly found in the mapping flow table. There is no need to generate the first flow identifier again. This improves detection efficiency of the in-situ flow detection.

In a possible implementation, after the mapping flow table is constructed, the mapping flow table may be further maintained. A manner of maintaining the mapping flow table may be: deleting the correspondence between the first service characteristic information and the first flow identifier in the mapping flow table if a service packet including the first service characteristic information is not received in a reference periodicity; and recollecting the first flow identifier when duration since the correspondence between the first service characteristic information and the first flow identifier is deleted reaches reference duration. The recollected first flow identifier may be allocated to other service characteristic information. The mapping flow table is maintained, so that validity of the mapping flow table can be kept. An aged flow identifier is promptly recollected, so that flow identifier utilization can be improved.

In a possible implementation, the first network device may further report the mapping flow table to the control device. In this way, the control device can analyze, based on the mapping flow table, a plurality of pieces of received in-situ flow detection data that are respectively sent by a plurality of network devices on a forwarding path of the service flow, and further obtain, based on an analysis result, quality of service corresponding to the service flow.

According to a second aspect, an in-situ flow detection method is provided. An example in which a control device performs the method is used. The method includes: A control device sends a service characteristic range of a first in-situ flow detection instance to a first network device. The service characteristic range of the first in-situ flow detection instance is used by the first network device to generate, based on first service characteristic information of a first service packet when the first service characteristic information belongs to the service characteristic range, a first flow identifier corresponding to a service flow to which the first service packet belongs.

According to the method, the service characteristic range is sent to the first network device, so that the first network device can accurately perform in-situ flow detection on a specified service flow. In this way, a target of the in-situ flow detection is more accurate. In addition, the service characteristic range includes a plurality of pieces of service characteristic information. Therefore, accurate in-situ flow detection on a service flow whose service characteristic information belongs to the service characteristic range and is dynamically changed can be implemented.

In a possible implementation, the first service packet is an initial packet of the service flow or an initial packet obtained after service characteristic information of the service flow changes.

In a possible implementation, the control device further sends an identifier of the first in-situ flow detection instance to the first network device. The identifier of the first in-situ flow detection instance is used by the first network device to generate the first flow identifier based on the identifier of the first in-situ flow detection instance and a first service identifier. The first service identifier is allocated by the first network device to the first service characteristic information. The identifier of the first in-situ flow detection instance is unique in an in-situ flow detection domain, and the first service identifier is unique in the first network device. Therefore, the first flow identifier generated by the first network device based on the identifier of the first in-situ flow detection instance and the first service identifier is unique in the in-situ flow detection domain. This ensures that no conflict occurs on the first flow identifier on each network device in the in-situ flow detection domain. This improves in-situ flow detection accuracy.

In a possible implementation, the control device further receives a mapping flow table sent by the first network device. The mapping flow table includes a plurality of pieces of service characteristic information and a flow identifier corresponding to each piece of service characteristic information. In this way, the control device can analyze, based on the mapping flow table, a plurality of pieces of received in-situ flow detection data that are respectively sent by a plurality of network devices on a forwarding path of the service flow, and further obtain, based on an analysis result, quality of service corresponding to the service flow.

According to a third aspect, an in-situ flow detection apparatus is provided. The apparatus is used in a first network device, and the apparatus includes:
a first receiving module, configured to receive a first service packet;
a generation module, configured to generate, based on first service characteristic information included in the first service packet, a first flow identifier corresponding to a service flow to which the first service packet belongs, where the first service characteristic information identifies a service packet belonging to the service flow;
an obtaining module, configured to add the first flow identifier to the first service packet, to obtain a second service packet, where the first flow identifier indicates a second network device receiving the second service packet to perform in-situ flow detection based on the first flow identifier; and
a first sending module, configured to send the second service packet.

In a possible implementation, the first service packet is an initial packet of the service flow or an initial packet obtained after service characteristic information of the service flow changes.

In a possible implementation, the generation module is configured to generate the first flow identifier based on an identifier of the first network device, an identifier of a first chip, and a first service identifier. The first chip is a chip that is on the first network device and that receives the first service packet. The first service identifier is allocated by the first chip to the first service characteristic information.

In a possible implementation, the generation module is configured to generate the first flow identifier based on an identifier of the first network device, an identifier of a first chip, an identifier of a first storage medium, and a first service identifier. The first storage medium on the first chip is a storage medium that is on the first network device and that receives the first service packet. The first service identifier is allocated by the first storage medium to the first service characteristic information.

In a possible implementation, the apparatus further includes:
a second receiving module, configured to receive an identifier of a first in-situ flow detection instance that is sent by a control device, where the first in-situ flow detection instance is used to perform in-situ flow detection on the service flow.

The generation module is configured to generate the first flow identifier based on the identifier of the first in-situ flow detection instance and a first service identifier, where the first service identifier is allocated by the first network device to the first service characteristic information.

In a possible implementation, the second receiving module is further configured to receive a service characteristic range of the first in-situ flow detection instance that is sent by the control device.

The generation module is configured to: when the first service characteristic information belongs to the service characteristic range, generate, based on the first service characteristic information included in the first service packet, the first flow identifier corresponding to the service flow to which the first service packet belongs.

In a possible implementation, the apparatus further includes:
a storage module, configured to store a correspondence between the first service characteristic information and the first flow identifier into a mapping flow table, where the mapping flow table includes a plurality of pieces of service characteristic information and a flow identifier corresponding to each piece of service characteristic information.

In a possible implementation, the apparatus further includes:
a deletion module, configured to delete the correspondence between the first service characteristic information and the first flow identifier in the mapping flow table if a service packet including the first service characteristic information is not received in a reference periodicity; and
a recollection module, configured to: recollect the first flow identifier when duration since the correspondence between the first service characteristic information and the first flow identifier is deleted reaches reference duration.

In a possible implementation, the apparatus further includes:
a second sending module, configured to send the mapping flow table to the control device.

According to a fourth aspect, an in-situ flow detection apparatus is provided. The apparatus is used in a control device, and the apparatus includes:
a sending module, configured to send a service characteristic range of a first in-situ flow detection instance to a first network device, where the service characteristic range of the first in-situ flow detection instance is used by the first network device to generate, based on first service characteristic information of a first service packet when the first service characteristic information belongs to the service characteristic range, a first flow identifier corresponding to a service flow to which the first service packet belongs.

In a possible implementation, the first service packet is an initial packet of the service flow or an initial packet obtained after service characteristic information of the service flow changes.

In a possible implementation, the sending module is further configured to send an identifier of the first in-situ flow detection instance to the first network device. The identifier of the first in-situ flow detection instance is used by the first network device to generate the first flow identifier based on the identifier of the first in-situ flow detection instance and a first service identifier. The first service identifier is allocated by the first network device to the first service characteristic information

In a possible implementation, the apparatus further includes:
a receiving module, configured to receive a mapping flow table sent by the first network device, where the mapping flow table includes a plurality of pieces of service characteristic information and a flow identifier corresponding to each piece of service characteristic information.

According to a fifth aspect, a network device is provided. The network device includes a processor. The processor is coupled to a memory. The memory stores at least one program instruction or at least one piece of code. The at least one program instruction or the at least one piece of code is loaded and executed by the processor, to enable the network device to implement the in-situ flow detection method according to the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into a same chip, or may be separately disposed on different chips. A type of the memory and a manner of disposing the memory and the processor are not limited in this application.

According to a sixth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive and send signals. In addition, when the processor executes the instructions stored in the memory, the communication apparatus is enabled to perform the method according to the first aspect or any one of the possible implementations of the first aspect, or the method according to the second aspect or any one of the possible implementations of the second aspect.

According to a seventh aspect, an in-situ flow detection system is provided. The in-situ flow detection system includes a first network device and a control device.

The first network device is configured to perform the method according to the first aspect or any one of the possible implementations of the first aspect, and the control device is configured to perform the method according to the second aspect or any one of the possible implementations of the second aspect.

According to an eighth aspect, a computer-readable storage medium is provided. The storage medium stores at least one instruction. The instruction is loaded and executed by a processor, to enable a computer to implement the method according to the first aspect or any one of the possible implementations of the first aspect, or the method according to the second aspect or any one of the possible implementations of the second aspect.

According to a ninth aspect, a computer program (product) is provided. The computer program (product) includes computer program code. When the computer program code is run by a computer, the computer is enabled to perform the methods according to the foregoing aspects.

According to a tenth aspect, a chip is provided. The chip includes a processor, configured to invoke instructions from a memory and run the instructions stored in the memory, to enable a communication device on which the chip is installed to perform the methods according to the foregoing aspects.

In a possible implementation, the chip and a first chip that is on a first network device and that receives a first service packet may be a same chip, or may be different chips.

According to an eleventh aspect, another chip is provided. The chip includes an input interface, an output interface, a processor, and a memory. The input interface, the output interface, the processor, and the memory are connected through an internal connection path. The processor is configured to execute code in the memory. When the code is executed, the processor is configured to perform the methods according to the foregoing aspects.

In a possible implementation, the chip and a first chip that is on a first network device and that receives a first service packet may be a same chip, or may be different chips.

It should be understood that, in this application, for beneficial effects achieved by technical solutions in the third aspect to the eleventh aspect and corresponding possible implementations, refer to technical effects of the first aspect, the second aspect, and corresponding possible implementations. Details are not described herein again.

### BRIEF DESCRIPTION OF DRAWINGS

FIG. 1 is a schematic diagram of an implementation environment of an in-situ flow detection method according to an embodiment of this application;
FIG. 2 is a schematic diagram of an in-situ flow detection process according to an embodiment of this application;
FIG. 3 is a schematic flowchart of an in-situ flow detection method according to an embodiment of this application;
FIG. 4 is a schematic diagram of delivering configuration information by a control device according to an embodiment of this application;
FIG. 5 is a schematic flowchart of maintaining a mapping flow table according to an embodiment of this application;
FIG. 6 is a schematic diagram of a structure of an in-situ flow detection header according to an embodiment of this application;
FIG. 7 is a schematic flowchart of obtaining a flow identifier according to an embodiment of this application;
FIG. 8 is a schematic diagram of another in-situ flow detection process according to an embodiment of this application;
FIG. 9 is a schematic diagram of a structure of an in-situ flow detection apparatus according to an embodiment of this application;
FIG. 10 is a schematic diagram of a structure of another in-situ flow detection apparatus according to an embodiment of this application;
FIG. 11 is a schematic diagram of a structure of a switch according to an embodiment of this application;
FIG. 12 is a schematic diagram of a structure of a network device according to an embodiment of this application; and
FIG. 13 is a schematic diagram of a structure of another network device according to an embodiment of this application.

### DESCRIPTION OF EMBODIMENTS

To make the objectives, technical solutions, and advantages of this application clearer, the following further describes implementations of this application in detail with reference to the accompanying drawings.

Before embodiments of this application are described in detail, an application scenario of embodiments of this application is first described.

With continuous development of communication technologies, a network scale gradually expands. On each network device on a forwarding path, in-situ flow detection is performed on a service flow communicated in a network, so that an actual transmission status of the service flow may be obtained. In this way, objectives of monitoring network performance in real time and perceiving a network fault quickly may be achieved. This ensures that a high-quality, stable, and reliable network service can be provided.

For example, in an in-situ flow information telemetry (in-situ flow information telemetry, iFIT) in-situ flow detection technology, a detection object is usually a service flow. The service flow may be flexibly defined based on service characteristic information. The service characteristic information may include quintuple information of a service packet. The quintuple information includes a destination internet protocol (internet protocol, IP) address, a source IP address, a protocol (Protocol) number, a layer 4 destination port number, and a layer 4 source port number. One flow identifier (Flow identity, Flow ID) is obtained by mapping the service characteristic information, so that the service characteristic information identifying different service flows can be simplified. Flow IDs of different service flows are uniformly allocated by using a management and control plane (for example, a control device), to ensure that a flow ID is globally unique in a detection domain. In this way, any network device can uniquely identify one service flow by using the flow ID. In a process of performing in-situ flow detection, a network device serving as an initial (Initial) node completes identification of service characteristic information at an ingress for receiving a service flow, and then adds, based on a flow ID allocated by the management and control plane to the service characteristic information, in-situ flow detection information (including the flow ID) to a service packet belonging to the service flow. This implements in-band in-situ flow detection.

However, the service characteristic information of the service flow may be changed. Even if a same type of service flow is of a same user, it cannot be ensured that a quintuple is not changed. For example, a layer 4 source port number of a transmission control protocol (transmission control protocol, TCP)/user datagram protocol (user datagram protocol, UDP) packet initiated by a terminal or a server at different time points is dynamically changed. For another example, when a network fault occurs, service characteristic information of a same service flow changes after the service flow is re-initiated or a link is re-established. For still another example, in a communication network of a virtual extensible local area network (virtual extensible local area network, VXLAN), service characteristic information encapsulated in an outer tunnel of a same service flow changes in real time.

When service characteristic information of a service packet belonging to a same service flow changes, in the foregoing manner of statically delivering a flow identifier by the control device, the control device cannot quickly perceive the change. Consequently, a data plane cannot promptly obtain a flow ID corresponding to changed service characteristic information, and the service packet whose service characteristic information changes is not detected. In this case, a detection effect of in-situ flow detection is lossy and inaccurate.

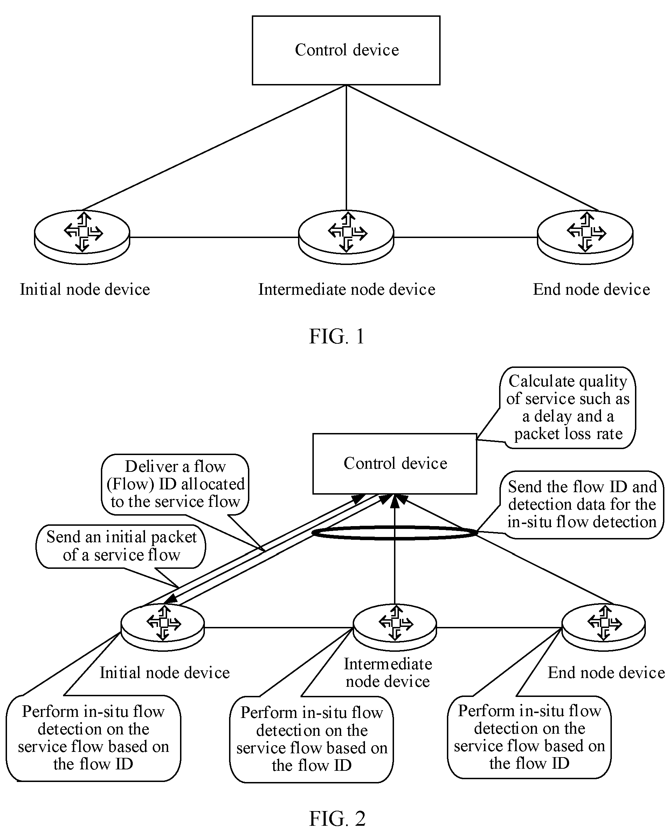

A schematic diagram of an implementation environment of an in-situ flow detection method according to an embodiment of this application shown in FIG. 1 is used as an example. The implementation environment includes an initial node device, an intermediate node device, an end node device, and a control device. The initial node device, the intermediate node device, and the end node device are all connected to the control device. The initial node device, the intermediate node device, and the end node device are network devices on a forwarding path of service flow transmission. It may be understood that the initial node device receiving a service flow is an ingress of a service flow in a network, and the end node device sending the service flow is an egress of the service flow in the network. Optionally, the implementation environment shown in FIG. 1 may further include two or more intermediate node devices. A quantity of intermediate node devices is not limited in this embodiment of this application.

The initial node device, the intermediate node device, and the end node device are configured to actually deploy in-situ flow detection, to obtain detection data for performing in-situ flow detection on the service flow, and report the detection data to the control device. The initial node device, the intermediate node device, and the end node device may be network devices having layer 3 forwarding capabilities, for example, a router or switching.

The control device is configured to receive and manage the detection data that is reported by each network device and that is of the network device on the forwarding path of the service flow. The control device may be a server, and a controller is deployed on the server. The controller may be positioned as a brain of a future cloud-based network, and integrates network management, service control, and network analysis and other functions. The controller is a core enabling system for implementing network resource pooling, network connection automation and self-optimization, and operation & maintenance automation. A server, also referred to as a servomotor, is a device providing a computing service. The server is capable of undertaking and assuring a service. For example, the server is an x86 server, also referred to as a complex instruction system computer (complex instruction set computer, CISC) architecture-based server or a personal computer (personal computer, PC) server.

FIG. 2 is a schematic diagram of an in-situ flow detection process according to an embodiment of this application. As shown in FIG. 2, after perceiving an initial service packet (initial packet for short) of a new service flow, an initial node device sends the initial packet of the service flow to a control device. The control device allocates a corresponding flow ID to the service flow based on service characteristic information (for example, a quintuple) of the initial packet, and delivers the flow ID to the initial node device. The initial node device includes the flow ID in a communicated service packet, so that the initial node device, the intermediate node device, and the end node device on a forwarding path can perform identification and in-situ flow detection on a service packet of the service flow based on the flow ID, and send the flow ID and detection data of the in-situ flow detection to the control device. The control device completes measurement of quality of service such as path restoration, a packet loss rate, and a delay based on the received detection data of the in-situ flow detection.

However, because a time process is needed from sending the initial packet to delivering the flow ID, the flow identifier is not promptly obtained. Consequently, quality of service of a short flow cannot be monitored, and detection data in an initial detection periodicity is also lost for a long flow. The short flow is a service flow whose survival time is at a millisecond level, in other words, transmission duration of the short flow is less than 1 centisecond. The long flow is a service flow whose survival time is at a centisecond level or above. In other words, transmission duration of the long flow is greater than 1 centisecond. In addition, information exchange between the control device and the node device may have a phenomenon such as a packet loss or a link exception. If the sent initial packet or the delivered flow identifier is lost, there is a high probability that the in-situ flow detection is damaged. In addition, if a large quantity of initial packets are sent to the control device simultaneously, performance of the control device is affected, and there is a risk of attacking the control device.

Based on this, an embodiment of this application provides an in-situ flow detection method. According to the method, a flow ID is generated on a data plane, so that lossless in-situ flow detection can be performed on a service flow (including a long flow and a short flow) whose service characteristic information is dynamically changed, and detection data in an initial detection periodicity is not lost. This improves a detection capability of the in-situ flow detection. In addition, a frequency of information exchange between a control plane and the data plane is reduced. This avoids the effect on the performance of the control device on the control plane.

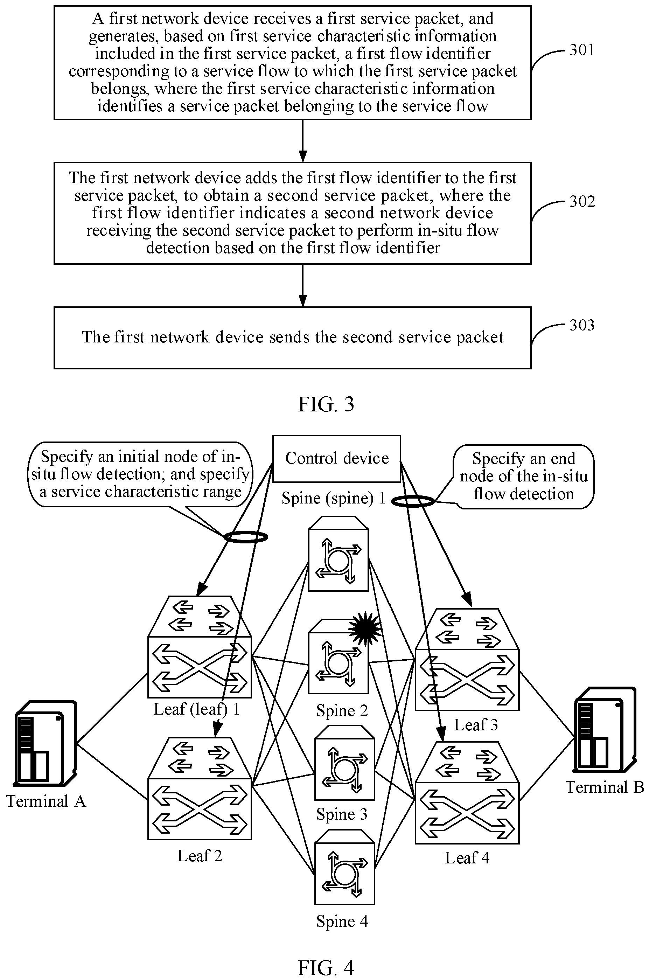

The following uses a first network device and the control device as an example to describe the in-situ flow detection method provided in this embodiment of this application. With reference to the implementation environment shown in FIG. 1, the first network device corresponds to the initial node device in FIG. 1, and the control device corresponds to the control device in FIG. 1. Refer to FIG. 3. The method includes but is not limited to the following steps 301 to 303.

Step 301: The first network device receives a first service packet, and generates, based on first service characteristic information included in the first service packet, a first flow identifier corresponding to a service flow to which the first service packet belongs. The first service characteristic information identifies a service packet belonging to the service flow.

In this embodiment of this application, after receiving the first service packet, the first network device can generate the first flow identifier corresponding to the service flow to which the first service packet belongs. The first flow identifier can uniquely identify the service flow to which the first service packet belongs in an entire network. Therefore, information exchange with the control device is not needed, and a flow identifier is generated on a data plane.

The first service characteristic information identifies the service packet belonging to the service flow. To be specific, each time the first network device receives one service packet, the first network device identifies service characteristic information included in the service packet, and determines, based on the service characteristic information, a service flow to which the service packet belongs. It may be understood that, content of the first service characteristic information included in the first service packet in different communication scenarios is different, and different content of the first service characteristic information causes a different granularity of the service flow corresponding to the first service characteristic information.

The content of the first service characteristic information is not limited in this embodiment of this application. In other words, a granularity of a service flow on which in-situ flow detection is performed is not limited. The granularity may be flexibly adjusted based on an application scenario. Different content of the first service characteristic information is set, so that in-situ flow detection at different granularities can be implemented, and application of in-situ flow detection is more flexible.

Optionally, the first service characteristic information may include at least one piece of information in quintuple information. The quintuple information includes a source IP, a destination IP, a source port, a destination port, and a protocol number. When the first service packet is a service packet served by remote direct memory access (remote direct memory access, RDMA), in addition to the at least one piece of information in the quintuple information, the first service characteristic information may further include a queue pair (queue pair, QP) identifier. When the first service packet is a service packet served by a virtual private network (virtual private network, VPN), in addition to the at least one piece of information in the quintuple information, the first service characteristic information may further include a VPN identifier. When the first service packet is a tunnel-encapsulated service packet, the first service characteristic information may include at least one piece of information in quintuple information of a tunnel outer layer packet.

For example, when the first service characteristic information identifying the service packet belonging to the service flow includes the quintuple information, it is determined that a service packet including the quintuple information belongs to a same service flow, and a granularity of the service flow is quintuple. When the first service characteristic information identifying the service packet belonging to the service flow includes the quintuple information and the VPN ID, it is determined that a service packet including the quintuple information and the VPN ID belongs to a same service flow, and a granularity of the service flow is quintuple + VPN. It may be understood that, more content included in the first service characteristic information indicates a finer granularity of the service flow on which the in-situ flow detection is performed. On the contrary, less content included in the first service characteristic information indicates a coarser granularity of the service flow on which the in-situ flow detection is performed.

A trigger condition for generating, by the first network device based on the first service characteristic information included in the first service packet, the first flow identifier corresponding to the service flow to which the first service packet belongs is not limited in this embodiment of this application. Optionally, when the first service packet is an initial packet of the service flow or an initial packet obtained after service characteristic information of the service flow changes, the first flow identifier corresponding to the service flow to which the first service packet belongs is generated based on the first service characteristic information included in the first service packet.

When the first service packet is the initial packet obtained after the service characteristic information of the service flow changes, rapid and lossless in-situ flow detection on a service flow whose service characteristic information is dynamically changed can be implemented. In other words, the communicated service flow can be dynamically and accurately monitored. In a case in which the first service packet is the initial packet of the service flow, because there is no need to obtain the flow identifier by using a control plane, the in-situ flow detection on the service flow can be automatically implemented on the data plane. This improves in-situ flow detection efficiency.

It may be understood that, if the first network device performs in-situ flow detection on all communicated service flows, because a quantity of service flows is extremely large, the first network device needs very large storage space and a strong processing capability. Therefore, a service characteristic range is introduced in this embodiment of this application, so that the first network device can accurately perform in-situ flow detection on a service flow whose service characteristic information belongs to the service characteristic range, and can further implement different in-situ flow detection requirements by flexibly adjusting the service characteristic range.

Optionally, when the first service characteristic information belongs to the service characteristic range, the first flow identifier corresponding to the service flow to which the first service packet belongs is generated based on the first service characteristic information included in the first service packet. Alternatively, when the first service characteristic information belongs to the service characteristic range, and the first service packet is the initial packet of the service flow or the initial packet obtained after the service characteristic information of the service flow changes, the first flow identifier corresponding to the service flow to which the first service packet belongs is generated based on the first service characteristic information included in the first service packet.

Therefore, whether the first service characteristic information belongs to the service characteristic range is determined, so that in-situ flow detection on a specified service flow can be implemented. In this way, a target of the in-situ flow detection is more accurate. In addition, the service characteristic range includes a plurality of pieces of service characteristic information. Therefore, accurate in-situ flow detection on a service flow whose service characteristic information belongs to the service characteristic range and is dynamically changed can be implemented.

The service characteristic range may be obtained by configuring the first network device, or may be delivered by the control device to the first network device. When the service characteristic range is delivered by the control device, before generating, based on the first service characteristic information included in the first service packet, the first flow identifier corresponding to the service flow to which the first service packet belongs, the first network device further receives a service characteristic range of a first in-situ flow detection instance that is sent by the control device.

Content of the service characteristic range is not limited in this embodiment of this application, and may be flexibly adjusted based on an application scenario in which in-situ flow detection needs to be performed. For example, a quantity of characteristics included in the service characteristic range needs to be smaller than a quantity of characteristics included in the first service characteristic information. For example, the service characteristic range may include four-tuple information (a source IP, a destination IP, a destination port, and a protocol number), and the first service characteristic information obtained by identifying the first service packet includes the quintuple information (the source IP, the destination IP, the source port, the destination port, and the protocol number). Therefore, the first in-situ flow detection instance indicates to perform in-situ flow detection on at least one service flow that has a same source IP, a same destination IP, a same destination port, and a same protocol number and that may have a different source port. In this way, dynamic in-situ flow detection is implemented.

The following describes service characteristic ranges in different application scenarios by using examples. For example, for a key assurance service (referred to as a key assurance service for short) provided for an important conference or activity, or the like, in-situ flow detection needs to be performed on a service flow of the key assurance service, to ensure stable running of the important conference or activity. In this case, a service characteristic range may include a service identifier of the key assurance service. Alternatively, when quality of service of a specified user or a specified terminal needs to be obtained, a service characteristic range may include a source IP. Alternatively, when a fault occurs between two terminals and a fault location needs to be detected, a service characteristic range may include a source IP and a destination IP.

In a possible implementation, the control device specifies, based on a networking architecture of a network and a forwarding path of a service flow, an initial node device and an end node device corresponding to the service flow in the network. Configuration information of an in-situ flow detection instance, for example, a service characteristic range, an identifier, or the like of the in-situ flow detection instance is sent to the initial node device, to indicate the initial node device to perform in-situ flow detection on a service packet whose service characteristic information belongs to the service characteristic range. In this way, the in-situ flow detection is triggered.

FIG. 4 is a schematic diagram of delivering configuration information by a control device according to an embodiment of this application. A small quantity of packets are lost irregularly in a service flow between a terminal A and a terminal B, but a specific packet loss location is not determined. The in-situ flow detection method provided in this embodiment of this application may be used to perform in-situ flow detection on the service flow between the terminal A and the terminal B. Further, the corresponding packet loss location is determined based on detection data of the in-situ flow detection. As shown in FIG. 4, there are a plurality of node devices between the terminal A and the terminal B. A service flow sent by the terminal A to the terminal B is used as an example. A leaf (leaf) 1 switch and a leaf 2 switch that are connected to the terminal A are initial node devices. A leaf 3 switch and a leaf 4 switch that are connected to the terminal B are end node devices. A spine (spine) 1 switch, a spine 2 switch, a spine 3 switch, and a spine 4 switch that are between the terminal A and the terminal B are intermediate nodes. The spine 2 switch is a fault location in which a packet loss is caused.

After configuring an in-situ flow detection instance corresponding to this in-situ flow detection task, the control device delivers configuration information of the in-situ flow detection instance to the leaf 1 switch, the leaf 2 switch, the leaf 3 switch, and the leaf 4 switch, to specify the leaf 1 switch and the leaf 2 switch as initial nodes, specify the leaf 3 switch and the leaf 4 switch as end nodes, and specify a service characteristic range of in-situ flow detection performed by the initial nodes. After the leaf 1 switch and the leaf 2 switch receive a service packet sent by the terminal A, when service characteristic information included in the service packet belongs to the service characteristic range, and the service packet is an initial packet of the service flow or an initial packet obtained after service characteristic information of the service flow changes, the leaf 1 switch and the leaf 2 switch generate a corresponding flow identifier based on the service characteristic information included in the service packet, and further perform in-situ flow detection based on the flow identifier.

After triggering of the in-situ flow detection performed by the first network device is completed, the first network device may generate, based on the first service characteristic information included in the first service packet, the first flow identifier corresponding to the service flow to which the first service packet belongs. In this embodiment of this application, it needs to be ensured that the flow identifier generated by the first network device on the data plane is unique in an in-situ flow detection domain, to avoid a case in which no conflict occurs on different service flows on each network device in the in-situ flow detection domain. Therefore, the flow identifier in this embodiment of this application may be adaptively generated based on a required bit width of a flow identifier field and a chip architecture of the first network device. The in-situ flow detection domain is a node device related to performing in-situ flow detection.

A manner of generating, based on the first service characteristic information included in the first service packet, the first flow identifier corresponding to the service flow to which the first service packet belongs includes but is not limited to the following three manners.

Manner 1: The first flow identifier is generated based on an identifier of the first network device, an identifier of a first chip, and a first service identifier.

In Manner 1, the first network device includes a plurality of chips, and the first network device receives the first service packet by using the first chip in the plurality of chips. The first service identifier is allocated by the first chip to the first service characteristic information. Therefore, the first service identifier is unique in the first chip. The chip may be a forwarding chip. Optionally, a chip that is on the first network device and that generates the first flow identifier is a second chip. The first chip that is on the first network device and that receives the first service packet and the second chip that is on the first network device and that generates the first flow identifier may be a same chip or may be different chips.

In addition, the identifier of the first network device is a unique identifier uniformly allocated by the control device to a network device in the in-situ flow detection domain. That is, the identifier of the first network device is unique in the in-situ flow detection domain. The identifier of the first chip is a unique identifier uniformly allocated by the first network device to all chips on the first network device. That is, the identifier of the first chip is unique in the first network device. Therefore, the first flow identifier generated based on the identifier of the first network device, the identifier of the first chip, and the first service identifier is unique in the in-situ flow detection domain. This ensures that in an application scenario in which the first network device includes the plurality of chips, no conflict occurs on the first flow identifier on each network device in the in-situ flow detection domain. In this way, in-situ flow detection accuracy is improved.

Optionally, a manner of allocating, by the first chip, the corresponding first service identifier to the first service characteristic information may be as follows. The first service characteristic information is directly used as the first service identifier. Alternatively, masking is performed on the first service characteristic information, and a result obtained through the masking is used as the first service identifier. Alternatively, the first chip includes a plurality of service identifiers, and the plurality of service identifiers are different from each other. When a first service identifier needs to be allocated to the first service packet, one currently unused service identifier may be selected from the plurality of service identifiers as the first service identifier.

For example, flow identifier (Flow ID) = NodeID + ChipID + ChipFlowID, where NodeID represents the identifier of the first network device, ChipID represents the identifier of the first chip, and ChipFlowID represents the first service identifier allocated by the first chip to the first service characteristic information.

Manner 2: The first flow identifier is generated based on an identifier of the first network device, an identifier of a first chip, an identifier of a first storage medium, and a first service identifier.

In Manner 2, the first network device includes a plurality of chips, and each chip includes a plurality of storage media. The first network device receives the first service packet by using the first storage medium in the plurality of storage media. The first service identifier is allocated by the first storage medium to the first service characteristic information. For a manner of allocating the first service identifier by the first storage medium to the first service characteristic information, refer to the manner of allocating the first service identifier by the first chip to the first service characteristic information in Manner 1. Details are not described herein again.

Similarly, the identifier of the first network device is unique in the in-situ flow detection domain, the identifier of the first chip is unique in the first network device, and the identifier of the first storage medium is a unique identifier uniformly allocated by the first chip to all storage media on the first chip. That is, the identifier of the first storage medium is unique in the first chip. Therefore, the first flow identifier generated based on the identifier of the first network device, the identifier of the first chip, the identifier of the first storage medium, and the first service identifier is unique in the in-situ flow detection domain. This ensures that in an application scenario in which the first network device includes the plurality of chips and each chip includes the plurality of storage media, no conflict occurs on the first flow identifier on each network device in the in-situ flow detection domain. In this way, in-situ flow detection accuracy is improved.

The identifier of the first storage medium is the unique identifier uniformly allocated by the first chip to all the storage media on the first chip. Therefore, when architectures of the first chip are different, manners of identifying the first storage medium are different. Optionally, when the first chip is of a multi-die architecture, the first chip includes a plurality of dies. A die is a die (also referred to as a bare chip) before a chip is not encapsulated. Each die includes one pipeline (Pipeline). In this case, the identifier of the first storage medium may be a die identifier. In this case, Flow ID = NodeID + ChipID + DieID + PipelineFlowID, where DieID represents the identifier of the first storage medium, and PipelineFlowID represents the first service identifier allocated by the first storage medium to the first service characteristic information. When the first chip is of a multi-pipeline architecture, the first chip includes a plurality of dies, and each die includes a plurality of pipelines. In this case, the identifier of the first storage medium may be a die identifier and a pipeline identifier. In this case, Flow ID = NodeID + ChipID + DieID + PipelineID + PipelineFlowID, where DieID + PipelineID represents the identifier of the first storage medium.

Manner 3: The first flow identifier is generated based on an identifier of the first in-situ flow detection instance and a first service identifier.

In manner 3, because a chip structure of the first network device is not specifically refined, the first service identifier is allocated by the first network device to the first service characteristic information. A specific allocation method is the same as the allocation method in Manner 1 or Manner 2. The identifier of the first in-situ flow detection instance is a unique identifier of the first in-situ flow detection instance in the in-situ flow detection domain. Optionally, the identifier of the first in-situ flow detection instance is delivered by the control device.

In a possible implementation, before generating, based on the first service characteristic information included in the first service packet, the first flow identifier corresponding to the service flow to which the first service packet belongs, the first network device receives the identifier of the first in-situ flow detection instance that is sent by the control device. The first in-situ flow detection instance is used to perform in-situ flow detection on the service flow. The control device uniformly allocates corresponding identifiers to all in-situ flow detection instances in the in-situ flow detection domain, to ensure that the identifier of the first in-situ flow detection instance is unique in the in-situ flow detection domain.

The identifier of the first in-situ flow detection instance is unique in the in-situ flow detection domain, and the first service identifier is unique in the first network device. Therefore, the first flow identifier generated based on the identifier of the first in-situ flow detection instance and the first service identifier is unique in the in-situ flow detection domain. This ensures that no conflict occurs on the first flow identifier on each network device in the in-situ flow detection domain. In this way, in-situ flow detection accuracy is improved.

For example, Flow ID = InstanceID + NodeFlowID, where InstanceID represents the identifier of the first in-situ flow detection instance, and NodeFlowID represents the first service identifier allocated by the first network device to the first service characteristic information.

Therefore, in any one of the foregoing three manners, the first network device can generate, based on the first service characteristic information included in the first service packet, the first flow identifier corresponding to the service flow to which the first service packet belongs, and the first flow identifier can uniquely identify the service flow. This meets uniqueness of the flow identifier in the in-situ flow detection.

It may be understood that a field used to store or carry the flow identifier includes a corresponding required bit width, and the required bit width may be a maximum bit width. For example, the required bit width of the flow identifier field may be 40 bits (bits), 20 bits, or less. It can be learned from composition structures of the first flow identifier in the foregoing three manners that a needed bit width of the first flow identifier generated in Manner 1 or Manner 2 is relatively large, and a needed bit width of the first flow identifier generated in Manner 3 is relatively small. Therefore, based on the required bit width of the flow identifier field or the chip architecture of the first network device, a proper manner may be flexibly selected from the foregoing three manners, to generate the first flow identifier.

Next, after generating, based on the first service characteristic information included in the first service packet, the first flow identifier corresponding to the service flow to which the first service packet belongs, the first network device may further store a generated correspondence between the first service characteristic information and the first flow identifier into a mapping flow table. The mapping flow table includes a plurality of pieces of service characteristic information and a flow identifier corresponding to each piece of service characteristic information.

Optionally, the first network device receives a second service packet, where the second service packet includes second service characteristic information; and if the mapping flow table includes the second service characteristic information, uses a flow identifier corresponding to the second service characteristic information in the mapping flow table as a second flow identifier corresponding to the second service packet. The mapping flow table is constructed, so that when a non-initial packet including the first service characteristic information is received, the first flow identifier corresponding to the first service characteristic information may be directly found in the mapping flow table. There is no need to generate the first flow identifier again. This improves detection efficiency of the in-situ flow detection.

In a possible implementation, after the mapping flow table is constructed, the mapping flow table may be further maintained. A manner of maintaining the mapping flow table may be: deleting the correspondence between the first service characteristic information and the first flow identifier in the mapping flow table if a service packet including the first service characteristic information is not received in a reference periodicity; and recollecting the first flow identifier when duration since the correspondence between the first service characteristic information and the first flow identifier is deleted reaches reference duration. The recollected first flow identifier may be allocated to other service characteristic information. The mapping flow table is maintained, so that validity of the mapping flow table can be kept. An aged flow identifier is promptly recollected, so that flow identifier utilization can be improved.

The reference periodicity may be set based on experience, or may be flexibly adjusted based on an application scenario. For example, the reference periodicity is 3 minutes. The reference duration may be set based on experience, or may be flexibly adjusted based on an application scenario. For example, the reference duration is 10 seconds. The reference duration is limited, so that a case in which the first network device immediately allocates the first service identifier in the first flow identifier to other service characteristic information after deleting the correspondence between the first service characteristic information and the first flow identifier is avoided. This avoids a phenomenon in which a same first flow identifier corresponds to two pieces of service characteristic information in the mapping flow table of a second network device because the second network device has not deleted the correspondence between the first service characteristic information and the first flow identifier from the mapping flow table of the second network device. In this way, occurrence of detection exceptions in in-situ flow detection is reduced.

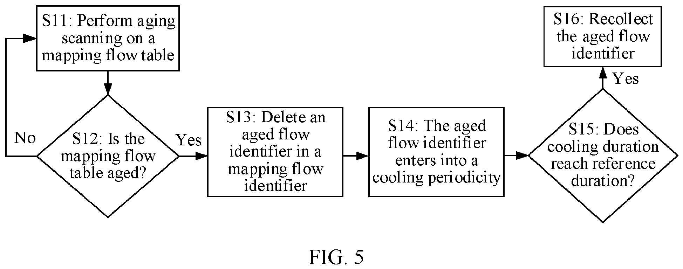

FIG. 5 is a schematic flowchart of maintaining a mapping flow table according to an embodiment of this application. As shown in FIG. 5, in step 11, a first network device performs aging scanning on the mapping flow table, to obtain, by scanning, an aged flow identifier included in the mapping flow table. The aged flow identifier indicates that a service packet including service characteristic information corresponding to the aged flow identifier is not received in a reference periodicity. In step 12, whether the mapping flow table is aged is determined. If the mapping flow table is not aged, step 11 is performed. If the mapping flow table is aged, step 13 is performed. That the mapping flow table is aged means that the mapping flow table includes the aged flow identifier. In step 13, the aged flow identifier in a mapping flow identifier is deleted. In other words, the aged flow identifier and the corresponding service characteristic information are deleted. In step 14, the aged flow identifier enters into a cooling periodicity. In other words, cooling duration since the aged flow identifier is deleted is calculated from a deletion moment. In step 15, whether the cooling duration reaches reference duration is determined. When the cooling duration reaches the reference duration, step 16 is performed. In step 16, the aged flow identifier is recollected. After the aged flow identifier is recollected, a service identifier in the recollected aged flow identifier may be allocated to other service characteristic information.

In this embodiment of this application, the first network device may further report the mapping flow table to the control device. In this way, the control device can analyze, based on the mapping flow table, a plurality of pieces of received in-situ flow detection data that are respectively sent by a plurality of node devices on the forwarding path of the service flow, and further obtain, based on an analysis result, quality of service corresponding to the service flow.

Step 302: The first network device adds the first flow identifier to the first service packet, to obtain a second service packet, where the first flow identifier indicates a second network device receiving the second service packet to perform in-situ flow detection based on the first flow identifier.

That the first network device adds the first flow identifier to the first service packet, to obtain the second service packet may be: The first network device adds an in-situ flow detection header to the first service packet, to obtain the second service packet. The in-situ flow detection header of the second service packet includes the first flow identifier. The second network device receiving the second service packet parses the in-situ flow detection header, to determine that the second service packet is a service packet on which in-situ flow detection needs to be performed, and performs in-situ flow detection based on the first flow identifier in the in-situ flow detection header.

In this embodiment of this application, after obtaining the corresponding flow identifier, the first network device further performs in-situ flow detection based on the first flow identifier. Optionally, the first network device performs in-situ flow detection on the received first service packet based on the first flow identifier, to obtain ingress detection data corresponding to the first flow identifier; and performs in-situ flow detection on the to-be-sent second service packet based on the first flow identifier, to obtain egress detection data corresponding to the first flow identifier. The ingress detection data and the egress detection data are obtained, so that a fault occurring inside the network device can be conveniently detected.

Optionally, after obtaining the ingress detection data and the egress detection data, the first network device further sends, to the control device, the first flow identifier and at least one of the ingress detection data or the egress detection data corresponding to the first flow identifier. For example, the first network device actively and periodically sends, to the control device, the first flow identifier and the at least one of the ingress detection data or the egress detection data corresponding to the first flow identifier.

In a possible implementation, the first network device maintains a detection flow table of the first network device. The detection flow table includes a flow identifier in a mapping flow table, and each flow identifier includes corresponding ingress detection data and egress detection data. In this case, the first network device directly sends the detection flow table to the control device.

A manner of obtaining the in-situ flow detection data is not limited in this embodiment of this application. For example, the in-situ flow detection data may be obtained by using a color mechanism of an alternate marking method for passive and hybrid performance monitoring (alternate-marking method for passive and hybrid performance monitoring) in a request for comments (Request For Comments, RFC) 8321. In the color mechanism, a color flag bit is added to a service packet, and then the color flag bit in the service packet is alternately colored based on a set detection periodicity. For example, a value of the color flag bit is set to 1 in a previous detection periodicity, and a value of the color flag bit is alternately set to 0 in a next detection periodicity. Statistics are made to 0 or 1 in each detection periodicity, to obtain in-situ flow detection data in each detection periodicity. In this case, the in-situ flow detection header may further include a flag color bit.

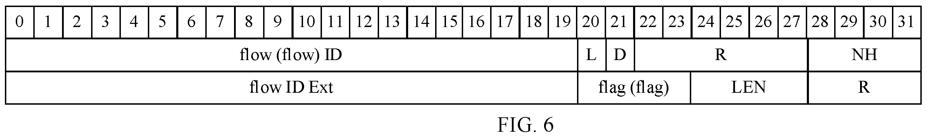

For example, FIG. 6 is a schematic diagram of a structure of an in-situ flow detection header according to an embodiment of this application. As shown in FIG. 6, the in-situ flow detection header includes "flow ID", "L", "D", "R", "NH", "flow ID Ext", "flag", and "LEN". For "flow ID", a length of this field is 20 bits, and the field is used to record a flow identifier. For "L" (Loss), "L" indicates a packet loss color flag, a length of this field is 1 bit, and this field is used to identify different color periodicities of packet loss detection, where 0/1 represents different periodicities. For "D" (Delay), "D" indicates a delay color flag, a length of this field is 1 bit, and if this field is set to 1, it indicates that a timestamp needs to be recorded. For "R" (Reserved), "R" indicates a reserved bit, a length of this field is 6 bits, and this field is used for protocol extension definition. For "NH" (Next Header), "NH" indicates a next packet header, a length of this field is 4 bits, and this field is used to identify extension header definition, where a value 0x00 indicates that no extension header is available, and values 0x01 to 0x08 are used for private extension. For flow identifier extension (flow ID Ext), "flow ID Ext" is used to extend a bit width, a length of this field is 20 bits, and this field and the flow ID field record the flow identifier. For "flag" (flag), a length of this field is 4 bits, and each bit is used to indicate a special purpose, for example, where whether a bit 20 is set determines whether a measurement mode of in-situ flow detection is an end-to-end mode or a hop-by-hop mode. For "LEN" (Length), "LEN" indicates a length, and a length of this field is 4 bits, and this field is used to indicate a length of an in-situ flow detection extension header with a byte as a unit.

Step 303: The first network device sends the second service packet.

Optionally, the first network device sends the second service packet to the second network device, where the second network device is an intermediate node device or an end node device on the forwarding path of the service flow. Similarly, the second network device receives the second service packet. Because the second service packet includes the first flow identifier, the second network device performs in-situ flow detection on the received second service packet based on the first flow identifier, to obtain ingress detection data corresponding to the first flow identifier. When forwarding the second service packet, the second network device performs in-situ flow detection on the sent second service packet based on the first flow identifier, to obtain egress detection data corresponding to the first flow identifier.

In this embodiment of this application, after obtaining the ingress detection data and the egress detection data, the second network device further sends, to the control device, the first flow identifier and at least one of the ingress detection data or the egress detection data corresponding to the first flow identifier. For example, the second network device actively and periodically sends, to the control device, the first flow identifier and at least one of the ingress detection data or the egress detection data corresponding to the first flow identifier.

It may be understood that the second network device maintains a detection flow table of the second network device. The detection flow table includes a flow identifier obtained from a detection header of a service packet, and each flow identifier includes corresponding ingress detection data and egress detection data. Similarly, in this case, the second network device directly sends the detection flow table to the control device.

Therefore, the control device can receive the first flow identifier and at least one of the ingress detection data or the egress detection data corresponding to the first flow identifier that are sent by a plurality of network devices such as the first network device and the second network device; and perform statistical analysis on all detection data corresponding to the first flow identifier, to obtain network performance corresponding to the first flow identifier. Further, the first service characteristic information corresponding to the first flow identifier can be determined based on the mapping flow table reported by the first network device, to obtain the quality of service of the service flow corresponding to the first service characteristic information.

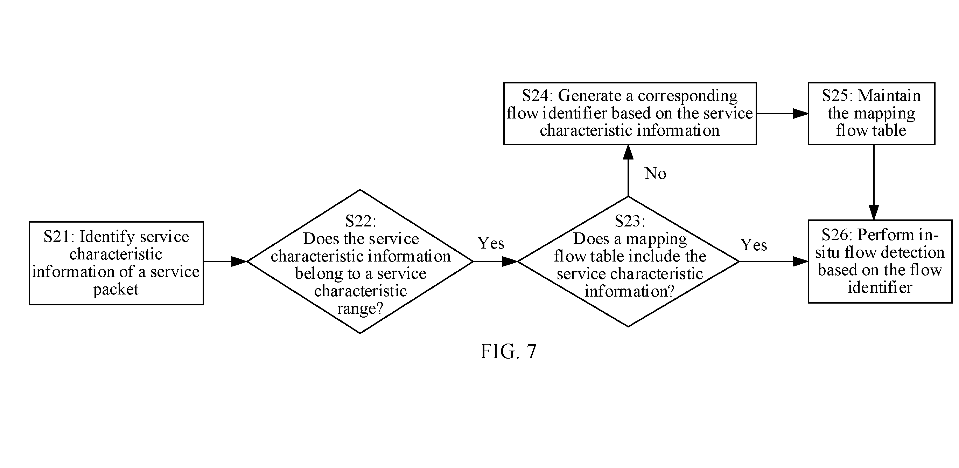

FIG. 7 is a schematic flowchart of obtaining a flow identifier according to an embodiment of this application. As shown in FIG. 7, after receiving a service packet, the first network device performs the following steps 21 to 26.

Step 21: Identify service characteristic information of the service packet.

Step 22: Determine whether the service characteristic information belongs to a service characteristic range, and when the service characteristic information belongs to the service characteristic range, perform step 23.

Step 23: Determine whether a mapping flow table includes the service characteristic information; and when the mapping flow table does not include the service characteristic information, perform steps 24 to 26; or when the mapping flow table includes the service characteristic information, perform step 26.

Step 24: Generate a corresponding flow identifier based on the service characteristic information.

Step 25: Maintain the mapping flow table.

Maintaining the mapping flow table includes: storing a generated correspondence between the flow identifier and the service characteristic information in the mapping flow table, and periodically performing aging and recollection on the mapping flow table.

Step 26: Perform in-situ flow detection based on the flow identifier.

It may be understood that, for content of steps 21 to 26, refer to content of steps 301 to 303. Details are not described herein again.

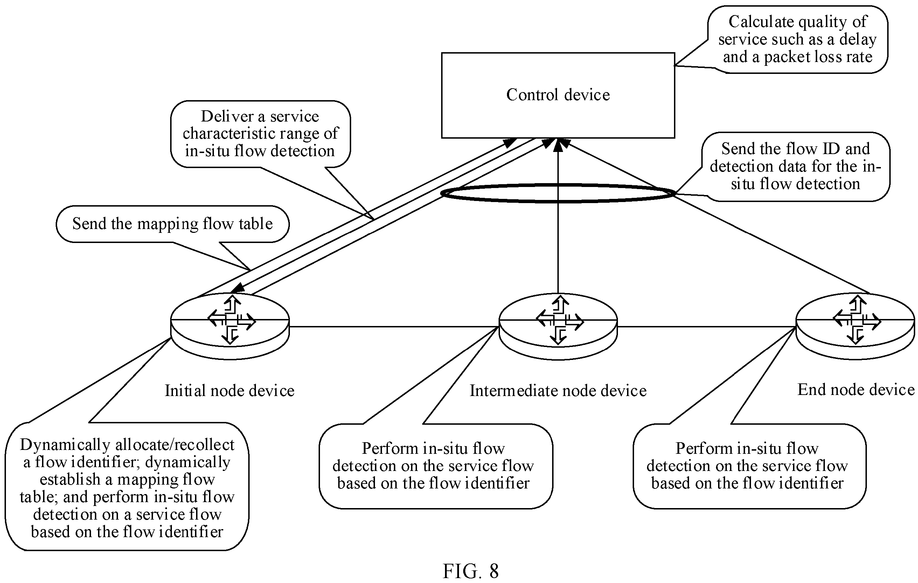

FIG. 8 is a schematic diagram of an in-situ flow detection process according to an embodiment of this application. As shown in FIG. 8, a control device delivers a service characteristic range of in-situ flow detection to an initial node device. After receiving a service packet, the initial node device identifies service characteristic information included in the service packet, and when the service characteristic information belongs to the service characteristic range, allocates a corresponding flow identifier to a service flow to which the service packet belongs. The flow identifier is carried in a communicated service packet, so that the initial node device, an intermediate node device, and an end node device on a forwarding path can perform identification and in-situ flow detection on a service packet of the service flow based on the flow identifier, and send the flow identifier and detection data of the in-situ flow detection to the control device.

The initial node device is responsible for dynamically allocating or recollecting a flow identifier, dynamically establishing a mapping flow table based on allocation or recollection of the flow identifier, and sending the mapping flow table to the control device. The control device completes measurement of quality of service such as path restoration, a packet loss rate, and a delay based on the received mapping flow table and the detection data of the in-situ flow detection that is sent by each node device.

Therefore, compared with the in-situ flow detection process shown in FIG. 2, the initial node device does not need to obtain the flow identifier by sending an initial packet to the control device, so that the corresponding flow identifier can be generated promptly and quickly. Therefore, quality of service of a short flow can be effectively monitored, and detection data in an initial detection periodicity is not lost for a long flow. In addition, frequent information exchange between the control device and the node device is not needed. This avoids effect on performance of the control device, reduces a risk of attacking the control device, and further reduces a probability that the in-situ flow detection is damaged.

According to the in-situ flow detection method provided in this embodiment of this application, a flow identifier is generated on a data plane, so that in-situ flow detection can be promptly performed on a service packet used to generate the flow identifier. In other words, lossless in-situ flow detection can be performed on a service flow (including a long flow and a short flow) whose service characteristic information is dynamically changed, and detection data in an initial detection periodicity is not lost. In this way, the detected service packet is more comprehensive, rapid and lossless in-situ flow detection is implemented, and a detection capability of the in-situ flow detection is improved.

Compared with a manner of obtaining a flow identifier by using a control plane, this not only improves generation efficiency of the flow identifier, but also reduces information exchange between the data plane and the control plane, so that damage to the in-situ flow detection caused by a phenomenon such as a packet loss during information exchange is avoided, and effect on performance of the control device on the control plane is avoided. This further ensures lossless in-situ flow detection.

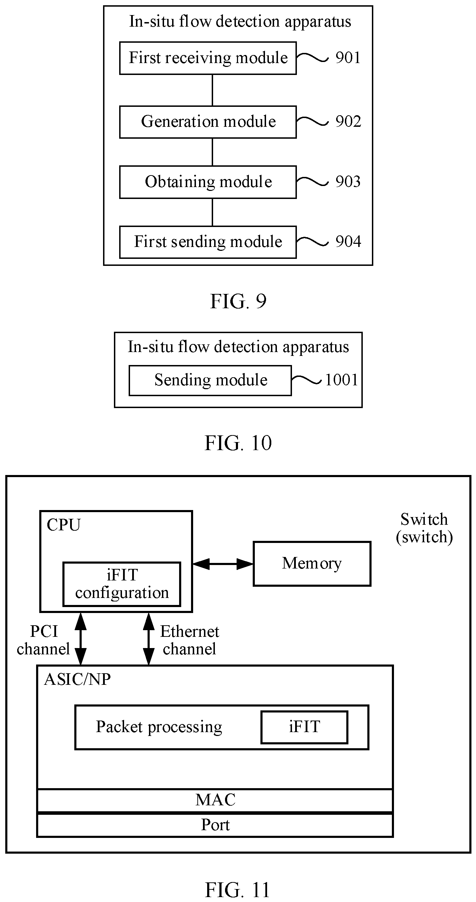

The foregoing describes the in-situ flow detection method in this embodiment of this application. Corresponding to the foregoing method, an embodiment of this application further provides an in-situ flow detection apparatus. FIG. 9 is a schematic diagram of a structure of an in-situ flow detection apparatus according to an embodiment of this application. The apparatus is used in a first network device, and the first network device is the initial node device shown in FIG. 1, FIG. 2, or FIG. 8. Based on the following plurality of modules shown in FIG. 9, the in-situ flow detection apparatus shown in FIG. 9 can perform all or some of operations performed by the first network device. It should be understood that the apparatus may include more additional modules than the shown modules, or some of the shown modules are omitted. This is not limited in this embodiment of this application. As shown in FIG. 9, the apparatus includes:
a first receiving module 901, configured to receive a first service packet;
a generation module 902, configured to generate, based on first service characteristic information included in the first service packet, a first flow identifier corresponding to a service flow to which the first service packet belongs, where the first service characteristic information identifies a service packet belonging to the service flow;
an obtaining module 903, configured to add the first flow identifier to the first service packet, to obtain a second service packet, where the first flow identifier indicates a second network device receiving the second service packet to perform in-situ flow detection based on the first flow identifier; and
a first sending module 904, configured to send the second service packet.

In a possible implementation, the first service packet is an initial packet of the service flow or an initial packet obtained after service characteristic information of the service flow changes.

In a possible implementation, the generation module 902 is configured to generate the first flow identifier based on an identifier of the first network device, an identifier of a first chip, and a first service identifier. The first chip is a chip that is on the first network device and that receives the first service packet. The first service identifier is allocated by the first chip to the first service characteristic information.

In a possible implementation, the generation module 902 is configured to generate the first flow identifier based on an identifier of the first network device, an identifier of a first chip, an identifier of a first storage medium, and a first service identifier. The first storage medium on the first chip is a storage medium that is on the first network device and that receives the first service packet. The first service identifier is allocated by the first storage medium to the first service characteristic information.

In a possible implementation, the apparatus further includes:
a second receiving module, configured to receive an identifier of a first in-situ flow detection instance that is sent by a control device, where the first in-situ flow detection instance is used to perform in-situ flow detection on the service flow; and

The generation module 902 is configured to generate the first flow identifier based on the identifier of the first in-situ flow detection instance and a first service identifier, where the first service identifier is allocated by the first network device to the first service characteristic information.

In a possible implementation, the second receiving module is further configured to receive a service characteristic range of the first in-situ flow detection instance that is sent by the control device.

The generation module 902 is configured to: when the first service characteristic information belongs to the service characteristic range, generate, based on the first service characteristic information included in the first service packet, the first flow identifier corresponding to the service flow to which the first service packet belongs.

In a possible implementation, the apparatus further includes:
a storage module, configured to store a correspondence between the first service characteristic information and the first flow identifier into a mapping flow table, where the mapping flow table includes a plurality of pieces of service characteristic information and a flow identifier corresponding to each piece of service characteristic information.

In a possible implementation, the apparatus further includes:
a deletion module, configured to delete the correspondence between the first service characteristic information and the first flow identifier in the mapping flow table if a service packet including the first service characteristic information is not received in a reference periodicity; and
a recollection module, configured to recollect the first flow identifier when duration since the correspondence between the first service characteristic information and the first flow identifier is deleted reaches reference duration.

In a possible implementation, the apparatus further includes:
a second sending module, configured to send the mapping flow table to the control device.

A flow identifier on a pure data plane is generated, so that the apparatus can promptly perform in-situ flow detection on a service packet used to generate the flow identifier. In this way, the detected service packet is more comprehensive, and rapid and lossless in-situ flow detection is implemented. Compared with a manner of obtaining a flow identifier by using a control plane, this not only improves generation efficiency of the flow identifier, but also reduces information exchange between the data plane and the control plane, so that damage to the in-situ flow detection caused by a phenomenon such as a packet loss during information exchange is avoided. This further ensures lossless in-situ flow detection, and improves a detection capability of the in-situ flow detection.

FIG. 10 is a schematic diagram of a structure of an in-situ flow detection apparatus according to an embodiment of this application. The apparatus is used in a control device, and the control device is the control device shown in FIG. 1, FIG. 2, or FIG. 8. Based on the following plurality of modules shown in FIG. 10, the in-situ flow detection apparatus shown in FIG. 10 can perform all or some of operations performed by the control device. It should be understood that the apparatus may include more additional modules than the shown modules, or some of the shown modules are omitted. This is not limited in this embodiment of this application. As shown in FIG. 10, the apparatus includes:
a sending module 1001, configured to send a service characteristic range of a first in-situ flow detection instance to a first network device, where the service characteristic range of the first in-situ flow detection instance is used by the first network device to generate, based on first service characteristic information of a first service packet when the first service characteristic information belongs to the service characteristic range, a first flow identifier corresponding to a service flow to which the first service packet belongs.

In a possible implementation, the first service packet is an initial packet of the service flow or an initial packet obtained after service characteristic information of the service flow changes.

In a possible implementation, the sending module 1001 is further configured to send an identifier of the first in-situ flow detection instance to the first network device. The identifier of the first in-situ flow detection instance is used by the first network device to generate the first flow identifier based on the identifier of the first in-situ flow detection instance and a first service identifier. The first service identifier is allocated by the first network device to the first service characteristic information

In a possible implementation, the apparatus further includes:
a receiving module, configured to receive a mapping flow table sent by the first network device, where the mapping flow table includes a plurality of pieces of service characteristic information and a flow identifier corresponding to each piece of service characteristic information.

The apparatus sends the service characteristic range to the first network device, so that the first network device can accurately perform in-situ flow detection on a specified service flow. In this way, a target of the in-situ flow detection is more accurate. In addition, the service characteristic range includes a plurality of pieces of service characteristic information. Therefore, accurate in-situ flow detection on a service flow whose service characteristic information belongs to the service characteristic range but is dynamically changed can be implemented.

It should be understood that, when the apparatus provided in FIG. 9 or FIG. 10 implement functions of the apparatus, division into the foregoing function modules is only used as an example for description. In actual application, the foregoing functions may be allocated to different functional modules for implementation based on a requirement. In other words, an inner structure of a device is divided into different function modules, to complete all or some of the functions described above. In addition, the apparatuses provided in the foregoing embodiments and the method embodiments belong to a same concept. For specific implementation processes thereof, refer to the method embodiments. Details are not described herein again.

FIG. 11 is a schematic diagram of a structure of a switch according to an embodiment of this application. The switch shown in FIG. 11 is configured to perform operation performed by the first network device shown in FIG. 3. As shown in FIG. 11, the switch (switch) includes a central processing unit (central processing unit, CPU), an application-specific integrated circuit (application-specific integrated circuit, ASIC)/network processor (network processor, NP), and a memory. The CPU is connected to the ASIC/NP through a peripheral component interconnect (peripheral component interconnect, PCI) channel (channel) and an Ethernet (ethernet) channel. Optionally, the ASIC/NP receives a first service packet through a port (port) and media access control (media access control, MAC), and identifies first service characteristic information in the first service packet by using a packet processing function of an iFIT module. The ASIC/NP sends the first service characteristic information obtained through identification to the CPU. The CPU generates, by using an iFIT configuration module based on the first service characteristic information, a first flow identifier corresponding to a service flow to which the first service packet belongs, and correspondingly stores the generated first flow identifier in the memory.

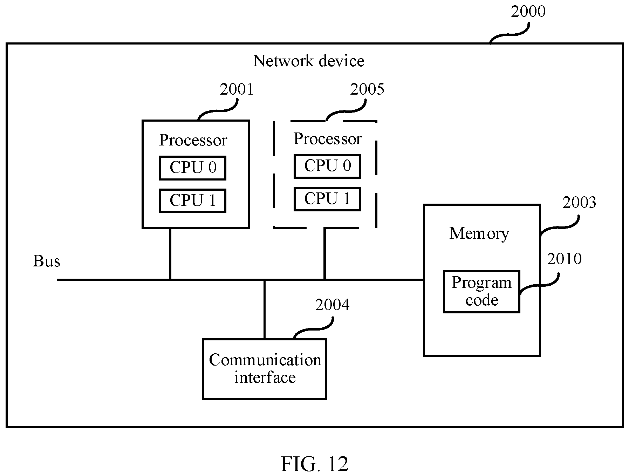

FIG. 12 is a schematic diagram of a structure of a network device 2000 according to an example embodiment of this application. The network device 2000 shown in FIG. 12 is configured to perform operations related to the in-situ flow detection method shown in FIG. 3. The network device 2000 is, for example, a switch or a router. The network device 2000 may be implemented by a generic bus architecture.

As shown in FIG. 12, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware part, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the network device 2000 further includes a bus. The bus is configured to transfer information between components of the network device 2000. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one line is used for representing the bus in FIG. 12, but this does not mean that there is only one bus or only one type of bus.

For example, the memory 2003 is a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. For example, the memory 2003 exists independently, and is connected to the processor 2001 by using the bus. The memory 2003 may alternatively be integrated with the processor 2001.

The communication interface 2004 is configured to communicate with another device or a communication network by using any transceiver-type apparatus. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 12. Each of these processors may be a single-core (single-core CPU) processor, or may be a multi-core (multi-core CPU) processor. The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 shown in FIG. 12. Each of these processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may further include an output device and an input device. The output device communicates with the processor 2001, and can display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and can receive a user input in a plurality of manners. For example, the input device may be a mouse, a keyboard, a touchscreen device, a sensor device, or the like.

In some embodiments, the memory 2003 is configured to store program code 2010 that is for performing the solutions of this application, and the processor 2001 can execute the program code 2010 stored in the memory 2003. In other words, the network device 2000 may implement, by using the processor 2001 and the program code 2010 in the memory 2003, the in-situ flow detection method provided in the method embodiments. The program code 2010 may include one or more software modules. Optionally, the processor 2001 may also store program code or instructions for executing the solutions of this application.

In a specific embodiment, the network device 2000 in this embodiment of this application may correspond to the first network device in the foregoing method embodiments, and the processor 2001 in the network device 2000 reads instructions in the memory 2003, so that the network device 2000 shown in FIG. 12 can perform all or some operations performed by the first network device.

Specifically, the processor 2001 is configured to: receive a first service packet through the communication interface; generate, based on first service characteristic information included in the first service packet, a first flow identifier corresponding to a service flow to which the first service packet belongs, where the first service characteristic information identifies a service packet belonging to the service flow; add the first flow identifier to the first service packet, to obtain a second service packet; and send the second service packet.

For brevity, another optional implementation is not described herein again.

For another example, the network device 2000 in this embodiment of this application may correspond to the control device in the foregoing method embodiments, and the processor 2001 in the network device 2000 reads instructions in the memory 2003, so that the network device 2000 shown in FIG. 12 can perform all or some operations performed by the control device.

Specifically, the processor 2001 is configured to send, by using the communication interface, a service characteristic range of a first in-situ flow detection instance to a first network device. The service characteristic range of the first in-situ flow detection instance is used by the first network device to generate, based on first service characteristic information of a first service packet when the first service characteristic information belongs to the service characteristic range, a first flow identifier corresponding to a service flow to which the first service packet belongs.

For brevity, another optional implementation is not described herein again.

The network device 2000 may alternatively correspond to the in-situ flow detection apparatus shown in FIG. 9 or FIG. 10, and each function module in the in-situ flow detection apparatus is implemented by using software of the network device 2000. In other words, the function modules included in the in-situ flow detection apparatus are generated after the processor 2001 of the network device 2000 reads the program code 2010 stored in the memory 2003.

The steps of the in-situ flow detection method shown in FIG. 3 are completed by an integrated logic circuit of hardware in the processor of the network device 2000 or instructions in a form of software. The steps of the methods disclosed with reference to embodiments of this application may be directly embodied as being performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium locates in the memory, and the processor reads information in the memory, and completes the steps of the foregoing methods in combination with the hardware of the processor. To avoid repetition, details are not described herein again.

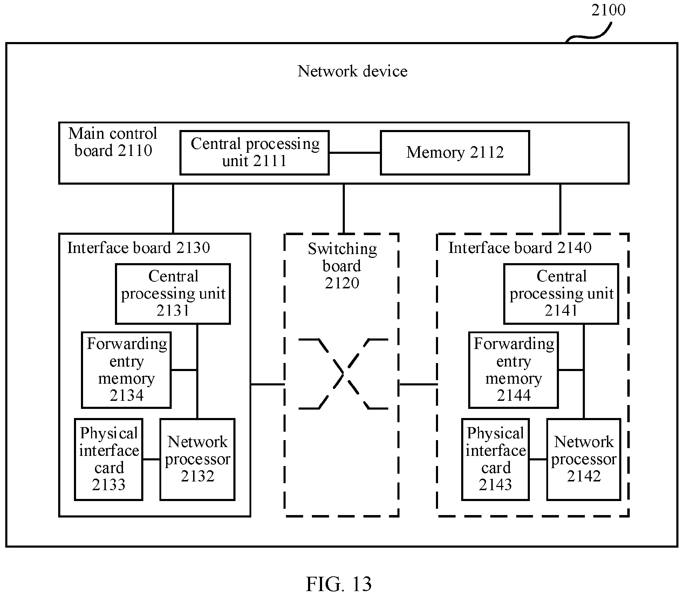

FIG. 13 is a schematic diagram of a structure of a network device 2100 according to another example embodiment of this application. The network device 2100 shown in FIG. 13 is configured to perform all or some of operations related to the in-situ flow detection method shown in FIG. 3 above. The network device 2100 is, for example, a switch or a router. The network device 2100 may be implemented by a generic bus architecture.

As shown in FIG. 13, the network device 2100 includes: a main control board 2110 and an interface board 2130.

The main control board is also referred to as a main processing unit (main processing unit, MPU) or a route processing card (route processor card). The main control board 2110 is configured to control and manage each component in the network device 2100, including functions of route calculation, device management, device maintenance, and protocol processing. The main control board 2110 includes a central processing unit 2111 and a memory 2112.

The interface board 2130 is also referred to as a line interface unit (line processing unit, LPU), a line card (line card), or a service board. The interface board 2130 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Client, FlexE Client). The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2111 on the main control board 2110.

The network processor 2132 is configured to implement packet forwarding. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field-programmable gate array (field-programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from the forwarding table based on the destination address, a next hop and an egress interface corresponding to the destination address, and forwards the packet to the egress interface corresponding to the destination address. Processing an uplink packet may include processing an ingress interface of the packet and searching a forwarding table. Processing a downlink packet may include searching a forwarding table, and the like. In some embodiments, the central processing unit may also perform a function of the forwarding chip, for example, implement software forwarding based on a general-purpose CPU, so that the interface board does not need the forwarding chip.

The physical interface card 2133 is configured to implement a physical layer interconnection function, so that original traffic enters the interface board 2130, and a processed packet is sent out from the physical interface card 2133. The physical interface card 2133, also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the physical interface card 2133 does not need the network processor 2132.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of parts in the interface board 2140 are the same as or similar to those of the interface board 2130. Details are not described herein again.

Optionally, the network device 2100 further includes a switching board 2120. The switching board 2120 may also be referred to as a switch fabric unit (switch fabric unit, SFU). When the network device 2100 has a plurality of interface boards, the switching board 2120 is configured to complete data exchange between the interface boards. For example, the interface board 2130 and the interface board 2140 may communicate with each other by using the switching board 2120.

The main control board 2110 is coupled with the interface board. For example, the main control board 2110, the interface board 2130, the interface board 2140, and the switching board 2120 are connected to a system backboard by using a system bus for interworking. In a possible implementation, an inter-process communication (inter-process communication, IPC) protocol channel is established between the main control board 2110, the interface board 2130, and the interface board 2140. Communication is performed between the main control board 2110, the interface board 2130, and the interface board 2140 through the IPC channel.

Logically, the network device 2100 includes a control plane and a forwarding plane. The control plane includes the main control board 2110 and the central processing unit 2111. The forwarding plane includes components for performing forwarding, such as the forwarding entry memory 2134, the physical interface card 2133, and the network processor 2132. The control plane performs functions such as a router, generating a forwarding table, processing signaling and protocol packets, and configuring and maintaining a status of the network device. The control plane delivers the generated forwarding table to the forwarding plane. On the forwarding plane, the network processor 2132 searches the forwarding table delivered by the control plane to forward a packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device having a stronger data processing capability provides a larger quantity of interface boards. There may also be one or more physical interface cards on the interface board. There may be no switching board or one or more switching boards. When there are a plurality of switching boards, load sharing and redundancy backup may be implemented together. In a centralized forwarding architecture, a network device may not need a switching board, and an interface board performs a function of processing service data of an entire system. In a distributed forwarding architecture, a network device may have at least one switching board, and implements data exchange between a plurality of interface boards by using the switching board, to provide a large-capacity data exchange and processing capability. Therefore, a data access and processing capability of the network device in the distributed architecture is greater than that of the network device in the centralized architecture. Optionally, a form of the network device may alternatively be a single card. In other words, there is no switching board, and functions of the interface board and the main control board are integrated into the card. In this case, the central processing unit on the interface board and the central processing unit on the main control board may be combined into one central processing unit on the card, to perform functions obtained by combining the two central processing units. The network device in this form (for example, a network device such as a low-end switch or router) has a low data exchange and processing capability. A specific architecture that is to be used depends on a specific networking deployment scenario. This is not limited herein.

In a specific embodiment, the network device 2100 corresponds to the in-situ flow detection apparatus that is shown in FIG. 9 and that is used in the first network device. In some embodiments, the first receiving module 901 and the first sending module 904 in the in-situ flow detection apparatus shown in FIG. 9 are equivalent to the physical interface card 2133 in the network device 2100, and the generation module 902 and the obtaining module 903 are equivalent to the central processing unit 2111 or the network processor 2132 in the network device 2100.

In some embodiments, the network device 2100 further corresponds to the in-situ flow detection apparatus that is shown in FIG. 10 and that is used in the control device. In some embodiments, the sending module 1001 in the in-situ flow detection apparatus shown in FIG. 10 is equivalent to the physical interface card 2133 in the network device 2100.

An embodiment of this application further provides an in-situ flow detection system. The processing system includes a first network device and a control device. For example, the first network device is the network device 2000 shown in FIG. 12 or the network device 2100 shown in FIG. 13, and the control device is the network device 2000 shown in FIG. 12 or the network device 2100 shown in FIG. 13. For the in-situ flow detection method performed by the first network device and the control device, refer to related descriptions in the embodiment shown in FIG. 3. Details are not described herein again.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive and send signals. When the processor executes the instructions stored in the memory, the processor is enabled to perform the method that needs to be performed by the first network device.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive and send signals. When the processor executes the instructions stored in the memory, the processor is enabled to perform the method that needs to be performed by the control device.

It should be understood that the processor may be a CPU, another general-purpose processor, a digital signal processor (digital signal processor, DSP), an application-specific integrated circuit (application specific integrated circuit, ASIC), a field-programmable gate array (field-programmable gate array, FPGA) or another programmable logic device, a discrete gate, a transistor logic device, a discrete hardware component, or the like. The general-purpose processor may be a microprocessor, any conventional processor, or the like. It should be noted that the processor may be a processor supporting an advanced reduced instruction set computer machine (advanced RISC machine, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement any one of the foregoing in-situ flow detection methods.

An embodiment of this application further provides a computer program (product). When the computer program is executed by a computer, a processor or the computer is enabled to perform corresponding steps and/or procedures in the foregoing method embodiments.

An embodiment of this application further provides a chip. The chip includes a processor, configured to invoke instructions from a memory and run the instructions stored in the memory, to enable a communication device on which the chip is installed to perform any one of the foregoing in-situ flow detection methods. In a possible implementation, the chip and a first chip that is on a first network device and that receives a first service packet may be a same chip, or may be different chips.

An embodiment of this application further provides another chip. The chip includes an input interface, an output interface, a processor, and a memory. The input interface, the output interface, the processor, and the memory are connected through an internal connection path. The processor is configured to execute code in the memory. When the code is executed, the processor is configured to perform any one of the foregoing in-situ flow detection methods. In a possible implementation, the chip and a first chip that is on a first network device and that receives a first service packet may be a same chip, or may be different chips.

All or some of the foregoing embodiments may be implemented by using software, hardware, firmware, or any combination thereof. When the software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive)), or the like.

A person of ordinary skill in the art may be aware that, method steps and modules described in combination with embodiments disclosed in this specification, may be implemented by software, hardware, firmware, or a combination thereof. To clearly describe interchangeability between the hardware and the software, the foregoing has generally described steps and compositions of embodiments based on functions. Whether the functions are performed by the hardware or the software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

When the software is used to implement the foregoing embodiments, all or some of the foregoing embodiments may be implemented in a form of a computer program product. The computer program product includes one or more computer program instructions. In an example, the method in embodiments of this application may be described in the context of machine-executable instructions. For example, the machine-executable instructions are included in a program module that is in a device for execution on a real or virtual processor of a target. Generally, the program module includes a routine, a program, a library, an object, a class, a component, a data structure, and the like, and executes a particular task or implements a specific abstract data structure. In embodiments, functions of the program module may be combined or split between the described program module. The machine-executable instructions for the program module may be executed locally or in a distributed device. In the distributed device, the program module may be located in both a local storage medium and a remote storage medium.

Computer program code used to implement the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, a function/operation specified in the flowchart and/or the block diagram is caused to be implemented. The program code may be executed entirely on a computer, executed partially on a computer, executed as a standalone software package, executed partially on a computer and partially on a remote computer, or executed entirely on a remote computer or a server.

In the context of embodiments of this application, the computer program code or related data may be carried in any proper carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores a program for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any proper combination thereof.

It may be clearly understood by a person skilled in the art that, for the purpose of convenient and brief description, for a detailed working process of the described system, device, and module, refer to a corresponding process in the foregoing method embodiments. Details are not described herein again.

In the several embodiments provided in this application, it should be understood that the disclosed system, device, and method may be implemented in other manners. For example, the described device embodiments are merely examples. For example, division into the modules is merely logical function division and may be another division in actual implementation. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the devices or modules, or electrical connections, mechanical connections, or connections in other forms.

The modules described as separate parts may or may not be physically separate, and parts displayed as modules may or may not be physical modules, in other words, may be located in one position, or may be distributed on a plurality of network modules. Some or all of the modules may be selected based on actual requirements to achieve the objectives of the solutions in embodiments of this application.

In addition, function modules in embodiments of this application may be integrated into one processing module, each of the modules may exist alone physically, or two or more modules may be integrated into one module. The foregoing integrated module may be implemented in a form of hardware, or may be implemented in a form of a software function module.

When the integrated module is implemented in the form of the software function module and sold or used as an independent product, the integrated unit may be stored in a computer-readable storage medium. Based on such an understanding, the technical solutions in this application essentially, or a part contributing to a conventional technology, or all or some of the technical solutions may be embodied in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, terms such as "first" and "second" are used to distinguish between same items or similar items whose effects and functions are basically the same. It should be understood that there is no logical or time sequence dependency between "first", "second", and "nth", and a quantity and an execution sequence are not limited. It should be further understood that although terms such as "first" and "second" are used to describe various elements in the following descriptions, these elements are not limited by these terms. These terms are merely used to distinguish one element from another. For example, without departing from the scope of various examples, a first network device may be referred to as a second network device. Similarly, a second network device may be referred to as a first network device. Both the first network device and the second network device may be network devices, and in some cases, may be separate and different network devices.

It should be further understood that, sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second packets means two or more second packets. Terms "system" and "network" are often interchangeable in this specification.

It should be understood that the terms used in the descriptions of various examples in this specification are only intended to describe particular examples and are not intended to constitute a limitation. The terms "one" ("a" and "an") and "the" of singular forms used in the descriptions of the various examples and the appended claims are also intended to include plural forms, unless otherwise specified in the context clearly.

It should be further understood that, the term "and/or" used in this specification indicates and includes any or all possible combinations of one or more items in associated listed items. The term "and/or" describes an association relationship between associated objects, and represents that three relationships may exist. For example, A and/or B may represent the following cases: Only A exists, both A and B exist, and only B exists. In addition, the character "/" in this application generally represents an "or" relationship between the associated objects.

It should be further understood that the term "include" (also referred to as "includes", "including", "comprises", and/or "comprising") used in this specification specifies presence of the stated features, integers, steps, operations, elements, and/or parts, with presence or adding of one or more other features, integers, steps, operations, elements, parts, and/or their groups not excluded.

It should be further understood that the terms "if" and "if" may be interpreted as a meaning "when" ("when" or "upon"), "in response to determining", or "in response to detecting". Similarly, according to the context, the phrase "if determining " or "if detecting (a stated condition or event) " may be interpreted as a meaning of "when determining", "in response to determining", or "when detecting (a stated condition or event) is ed", or "in response to detecting (a stated condition or event)".

It should be understood that determining B based on A does not mean that B is determined based only on A, and B may also be determined based on A and/or other information.

It should be further understood that "one embodiment", "an embodiment", and "a possible implementation" mentioned throughout the specification mean that a particular feature, structure, or characteristic related to an embodiment or an implementation is included in at least one embodiment of this application. Therefore, "in one embodiment", "in an embodiment", or "a possible implementation" appearing throughout the specification may not necessarily refer to a same embodiment. In addition, these particular features, structures, or characteristics may be combined in one or more embodiments in any proper manner.

The foregoing descriptions are merely optional embodiments of this application, but are not intended to limit this application. Any modification, equivalent replacement, improvement, or the like made without departing from the principle of this application should fall within the protection scope of this application.

## Claims

1. An in-situ flow detection method, wherein the method comprises:
receiving, by a first network device, a first service packet, and generating, based on first service characteristic information comprised in the first service packet, a first flow identifier corresponding to a service flow to which the first service packet belongs, wherein the first service characteristic information identifies a service packet belonging to the service flow;
adding, by the first network device, the first flow identifier to the first service packet, to obtain a second service packet, wherein the first flow identifier indicates a second network device receiving the second service packet to perform in-situ flow detection based on the first flow identifier; and
sending, by the first network device, the second service packet.

2. The method according to claim 1, wherein the first service packet is an initial packet of the service flow or an initial packet obtained after service characteristic information of the service flow changes.

3. The method according to claim 1 or 2, wherein the generating, based on first service characteristic information comprised in the first service packet, a first flow identifier corresponding to a service flow to which the first service packet belongs comprises:
generating the first flow identifier based on an identifier of the first network device, an identifier of a first chip, and a first service identifier, wherein the first chip is a chip that is on the first network device and that receives the first service packet, and the first service identifier is allocated by the first chip to the first service characteristic information.

4. The method according to claim 1 or 2, wherein the generating, based on first service characteristic information comprised in the first service packet, a first flow identifier corresponding to a service flow to which the first service packet belongs comprises:
generating the first flow identifier based on an identifier of the first network device, an identifier of a first chip, an identifier of a first storage medium, and a first service identifier, wherein the first storage medium on the first chip is a storage medium that is on the first network device and that receives the first service packet, and the first service identifier is allocated by the first storage medium to the first service characteristic information.

5. The method according to claim 1 or 2, wherein before the generating, based on first service characteristic information comprised in the first service packet, a first flow identifier corresponding to a service flow to which the first service packet belongs, the method further comprises:
receiving an identifier of a first in-situ flow detection instance that is sent by a control device, wherein the first in-situ flow detection instance is used to perform in-situ flow detection on the service flow; and
the generating, based on first service characteristic information comprised in the first service packet, a first flow identifier corresponding to the first service packet comprises:
generating the first flow identifier based on the identifier of the first in-situ flow detection instance and a first service identifier, wherein the first service identifier is allocated by the first network device to the first service characteristic information.

6. The method according to any one of claims 1 to 5, wherein before the generating, based on first service characteristic information comprised in the first service packet, a first flow identifier corresponding to a service flow to which the first service packet belongs, the method further comprises:
receiving a service characteristic range of the first in-situ flow detection instance that is sent by the control device; and
the generating, based on first service characteristic information comprised in the first service packet, a first flow identifier corresponding to a service flow to which the first service packet belongs comprises:
when the first service characteristic information belongs to the service characteristic range, generating, based on the first service characteristic information comprised in the first service packet, the first flow identifier corresponding to the service flow to which the first service packet belongs.

7. The method according to any one of claims 1 to 6, wherein after the generating, based on first service characteristic information comprised in the first service packet, a first flow identifier corresponding to a service flow to which the first service packet belongs, the method further comprises:
storing a correspondence between the first service characteristic information and the first flow identifier into a mapping flow table, wherein the mapping flow table comprises a plurality of pieces of service characteristic information and a flow identifier corresponding to each piece of service characteristic information.

8. The method according to claim 7, wherein the method further comprises:
deleting the correspondence between the first service characteristic information and the first flow identifier in the mapping flow table if a service packet comprising the first service characteristic information is not received in a reference periodicity; and
recollecting the first flow identifier when duration since the correspondence between the first service characteristic information and the first flow identifier is deleted reaches reference duration.

9. The method according to claim 7 or 8, wherein the method further comprises:
sending the mapping flow table to the control device.

10. An in-situ flow detection method, wherein the method comprises:
sending, by a control device, a service characteristic range of a first in-situ flow detection instance to a first network device, wherein the service characteristic range of the first in-situ flow detection instance is used by the first network device to generate, based on first service characteristic information of a first service packet when the first service characteristic information belongs to the service characteristic range, a first flow identifier corresponding to a service flow to which the first service packet belongs.

11. The method according to claim 10, wherein the first service packet is an initial packet of the service flow or an initial packet obtained after service characteristic information of the service flow changes.

12. The method according to claim 10 or 11, wherein the method further comprises:
sending an identifier of the first in-situ flow detection instance to the first network device, wherein the identifier of the first in-situ flow detection instance is used by the first network device to generate the first flow identifier based on the identifier of the first in-situ flow detection instance and a first service identifier, and the first service identifier is allocated by the first network device to the first service characteristic information.

13. The method according to any one of claims 10 to 12, wherein the method further comprises:
receiving a mapping flow table sent by the first network device, wherein the mapping flow table comprises a plurality of pieces of service characteristic information and a flow identifier corresponding to each piece of service characteristic information.

14. A chip, wherein the chip comprises a processor, the processor is coupled to a memory, the memory stores at least one program instruction or at least one piece of code, and the at least one program instruction or the at least one piece of code is loaded and executed by the processor, to enable the chip to implement the in-situ flow detection method according to any one of claims 1 to 9.

15. The chip according to claim 14, wherein the chip is the same as a first chip that is on a first network device and that receives a first service packet.

16. An in-situ flow detection apparatus, wherein the apparatus is used in a first network device, and the apparatus comprises:
a first receiving module, configured to receive a first service packet;
a generation module, configured to generate, based on first service characteristic information comprised in the first service packet, a first flow identifier corresponding to a service flow to which the first service packet belongs, wherein the first service characteristic information identifies a service packet belonging to the service flow;
an obtaining module, configured to add the first flow identifier to the first service packet, to obtain a second service packet, wherein the first flow identifier indicates a second network device receiving the second service packet to perform in-situ flow detection based on the first flow identifier; and
a first sending module, configured to send the second service packet.

17. An in-situ flow detection apparatus, wherein the apparatus is used in a control device, and the apparatus comprises:
a sending module, configured to send a service characteristic range of a first in-situ flow detection instance to a first network device, wherein the service characteristic range of the first in-situ flow detection instance is used by the first network device to generate, based on first service characteristic information of a first service packet when the first service characteristic information belongs to the service characteristic range, a first flow identifier corresponding to a service flow to which the first service packet belongs.

18. A network device, wherein the network device comprises a processor, the processor is coupled to a memory, the memory stores at least one program instruction or at least one piece of code, and the at least one program instruction or the at least one piece of code is loaded and executed by the processor, to enable the network device to implement the in-situ flow detection method according to any one of claims 1 to 9 or the in-situ flow detection method according to any one of claims 10 to 13.

19. An in-situ flow detection system, wherein the in-situ flow detection system comprises a first network device and a control device, wherein
the first network device is configured to perform the in-situ flow detection method according to any one of claims 1 to 9, and the control device is configured to perform the in-situ flow detection method according to any one of claims 10 to 13.

20. A computer-readable storage medium, wherein the computer storage medium stores at least one instruction; and the at least one instruction is loaded and executed by a processor, to enable a computer to implement the in-situ flow detection method according to any one of claims 1 to 9 or the in-situ flow detection method according to any one of claims 10 to 13.

21. A computer program product, wherein the computer program product comprises computer program code; and the computer program code is loaded and executed by a computer, to enable the computer to implement the in-situ flow detection method according to any one of claims 1 to 9 or the in-situ flow detection method according to any one of claims 10 to 13.
